# EUROPEAN PATENT APPLICATION

(11) **EP 4 818 007 A1**
(43) Date of publication of application: **07.10.2026**
(21) Application number: 26161181.8
(22) Date of filing: 27.02.2026
(51) Int. Cl.: B62D 35/00, B62D 37/02, B62D 35/02

(54) **VEHICLE LOWER STRUCTURE**

(30) Priority: 31.03.2025 JP 2025059505
(71) Applicant: MAZDA MOTOR CORPORATION, Hiroshima 730-8670 (JP)
(72) Inventor: Katsuya, Miyamoto, Aki-gun, Hiroshima, 730-8670 (JP)
(74) Representative: Lorenz Seidler Gossel Part. mbB

(57) **Abstract**

[Problem] To provide a vehicle lower structure capable of preventing damage to an undercover caused by interference with a road surface.

[Means for Solution] A vehicle lower structure includes an undercover 4 that covers the bottom surface of a vehicle body 1 within a range on the front side of a pair of front wheels 2 and between the pair of front wheels 2. The undercover 4 includes a movable panel 11, a fixed frame 12, and a deformable member 13, the movable panel 11 being movable in an up-down direction, the fixed frame 12 being disposed above the movable panel 11, and being fixed to the bottom surface of the vehicle body 1, the deformable member 13 being deformable and coupling at least a front end portion 11c of the movable panel 11 to the fixed frame 12. The deformable member 13 is made of a material softer than the material of the movable panel 11, and is configured such that, when the movable panel 11 interferes with a road surface, the deformable member 13 is deformed, thereby allowing the movable panel 11 to move upward.

## Description

### [Technical Field]

The present invention relates to a vehicle lower structure.

### [Background Art]

Conventionally, various vehicle lower structures have been proposed that include a member, such as an undercover, on the lower side of a front portion of a vehicle body to control an airflow flowing through an area below the vehicle body during traveling of the vehicle.

Patent Literature 1, for example, discloses a vehicle including an undercover that is lowered during high-speed traveling of the vehicle. In this vehicle, negative pressure at the bottom part of a vehicle body is increased by the bottom surface of the undercover, which is lowered during high-speed traveling, thereby increasing suction of the vehicle body to the road to enhance stability during high-speed traveling.

Patent Literature 2 discloses a vehicle including movable tire covers that are lowered in front of tires during high-speed traveling of the vehicle. This movable tire covers prevent air from impinging on the tires during high-speed traveling.

### [Citation List]

### [Patent Literature]

[Patent Literature 1] Japanese Patent Laid-Open No. 2023-10984
[Patent Literature 2] Japanese Patent Laid-Open No. 2007-30549

### [Summary of Invention]

### [Problems to be Solved by the Invention]

In each of the above-mentioned two structures, there is a possibility that when the vehicle encounters an obstacle, such as a block protruding from a road surface, or a large stepped portion during traveling with a member, such as the undercover, that is provided on the lower side of the front portion of the vehicle body being lowered to a lower position close to the road surface, the undercover may interfere with the obstacle or the stepped portion. In such a case, there is a concern that the undercover may be damaged due to interference with the obstacle or the stepped portion on the road surface.

The present invention has been made under the above-mentioned circumstances, and it is an object of the present invention to provide a vehicle lower structure that is capable of preventing damage to an undercover caused by interference with the road surface.

### [Means for Solving the Problems]

To solve the above-mentioned problem, a vehicle lower structure of the present invention includes an undercover that is capable of covering a bottom surface of a vehicle body of a vehicle within a range on a front side of a pair of front wheels and between the pair of front wheels, the vehicle lower structure being characterized in that the undercover includes a movable panel, a fixed frame, and a deformable member, the movable panel being movable in an up-down direction, i.e. in a vehicle height direction, the fixed frame being disposed, in a vehicle height direction, above the movable panel, and being fixed to the bottom surface of the vehicle body, the deformable member being deformable and coupling at least a front end portion of the movable panel to the fixed frame, and the deformable member is made of a material softer than a material of the movable panel, and is configured such that, when the movable panel interferes with a road surface, the deformable member is deformed, thereby allowing the movable panel to move upward.

In such a configuration, the undercover includes the movable panel, the fixed frame, and the soft deformable member, the fixed frame being fixed to the bottom surface of the vehicle body, the soft deformable member being deformable and coupling at least the front end portion of the movable panel to the fixed frame. Therefore, when the movable panel of the undercover comes into contact with an obstacle or a stepped portion protruding from the road surface during traveling of the vehicle, that is, when the movable panel interferes with the road surface, the soft deformable member is deformed, thereby allowing the movable panel to move upward and hence, it is possible to reduce a load received by the movable panel. Consequently, it is possible to prevent damage to the undercover when interference with the road surface occurs.

In the above-mentioned vehicle lower structure, it is preferable that the movable panel be made of polypropylene, and the deformable member be made of elastomer.

With such a configuration, the deformable member is made of elastomer, and thus is sufficiently softer than and has higher deformability than the movable panel made of polypropylene. Therefore, when the movable panel interferes with the road surface, the deformable member is significantly deformed with a small load, thereby allowing the movable panel to quickly and smoothly move upward. As a result, it is possible to reliably prevent damage to the undercover when interference with the road surface occurs.

In the above-described vehicle lower structure, it is preferable that the deformable member be disposed along an entire front end portion of the movable panel and side end portions of the movable panel on both sides in a vehicle width direction within a range, excluding a rear end portion of the movable panel, and the rear end portion of the movable panel be fixed to the fixed frame.

In such a configuration, the front end portion of the movable panel and both side end portions of the movable panel within the range, excluding the rear end portion of the movable panel, are coupled to the fixed frame via the deformable member, and the rear end portion of the movable panel is partially fixed to the fixed frame. Accordingly, the movable panel is supported on the fixed frame only at the rear end portion in a cantilever state and hence, when interference with the road surface occurs, the front end portion of the movable panel can significantly swing in the up-down direction. As a result, it is possible to reliably prevent damage to the undercover when interference with the road surface occurs.

In the above-mentioned vehicle lower structure, it is preferable that a length of the deformable member in cross section taken along a front-rear direction at a front portion of the undercover be longer than a length of the deformable member in cross section taken along the vehicle width direction at a side portion of the undercover.

With such a configuration, the swing range in the up-down direction of the front end portion of the movable panel is increased and hence, it is possible to more reliably prevent damage to the undercover when interference with the road surface occurs.

In the above-mentioned vehicle lower structure, it is preferable that the deformable member extend between the front end portion of the movable panel and the fixed frame to have a length equal to or less than a height of a front end portion of the deformable member when the front end portion of the movable panel moves upward.

In such a configuration, the deformable member extends between the front end portion of the movable panel and the fixed frame to have the above-mentioned length and hence, when the movable panel interferes with the road surface, and therefore the front end portion of the movable panel moves upward, the front end portion of the movable panel has a height equal to or less than the height of the front end portion of the deformable member. Consequently, it is possible to eliminate concern that the front end portion of the movable panel moves upward beyond the front end portion of the deformable member, thereby pulling and breaking the deformable member.

In the above-mentioned vehicle lower structure, it is preferable that the movable panel includes a flat bottom portion and a front inclined surface that is inclined upward as it extends toward a vehicle front side. With such a configuration, the flat bottom portion can be disposed at a height close to the road surface, which can decrease negative pressure and facilitate airflow, thereby reducing air resistance during traveling.

In the above-mentioned vehicle lower structure, it is preferable that the movable panel is supported in a cantilever state by being fixed to the fixed frame at the rear end portion. With such a configuration, where the movable panel is supported only at its rear end portion, the front end portion of the movable panel can swing significantly in the up-down direction when interference with the road surface occurs.

In the above-mentioned vehicle lower structure, it is preferable that the deformable member is a film-like body. With such a configuration, the film-like body provides excellent flexibility and allows for easy deformation with a small load. Furthermore, as described below, it can also serve to seal the gap between the movable panel and the fixed frame.

In the above-mentioned vehicle lower structure, it is preferable that the film-like deformable member closes a gap between the movable panel and the fixed frame to prevent intrusion of air or water. With such a configuration, the aerodynamic performance under the vehicle body is improved by preventing air from entering the undercover. Additionally, it protects components located above the undercover from water, dirt, and corrosion.

In the above-mentioned vehicle lower structure, it is preferable that the undercover is integrally formed by two-color molding of the polypropylene and the elastomer. With such a configuration, the manufacturing process is simplified, reducing assembly steps and costs. In the above-mentioned vehicle lower structure, it is preferable that the deformable member has recesses configured to serve as starting points of deformation.
With such a configuration, the recesses ensure that the deformable member deforms in a controlled and predictable manner upon impact. In the above-mentioned vehicle lower structure, it is preferable that a joining position between the deformable member and the front end portion of the movable panel is disposed at a position above an outer surface of the movable panel. With such a configuration, the joining position is shielded from direct contact with a road surface or an obstacle.

In the above-mentioned vehicle lower structure, it is preferable that a joining position between the deformable member and the side end portions of the movable panel is disposed at a position above a bottom portion of the movable panel. With such a configuration, the joining positions along the sides of the movable panel are protected from direct interference with the road surface.

Another aspect of the invention is directed to a vehicle comprising the vehicle lower structure according to the above described invention. In a preferred aspect of the vehicle, the fixed frame of the vehicle lower structure is fixed to a bumper and a suspension cross member of the vehicle body of the vehicle. With such a configuration, the fixed frame is anchored to strong, structural components of the vehicle. This provides a highly stable and rigid foundation for the entire undercover assembly, ensuring it can withstand the forces exerted during an impact without becoming detached from the vehicle body.

### [Advantageous Effects of Invention]

As described above, according to the vehicle lower structure of the present invention, it is possible to prevent damage to the undercover caused by interference with the road surface.

### [Brief Description of Drawings]

FIG. 1 is a perspective view showing a main part of a vehicle lower structure according to an embodiment of the present invention, with an undercover and an area around the undercover viewed obliquely from the lower front-left side.
FIG. 2 is an enlarged perspective view of the undercover shown in FIG. 1, as viewed from the lower front-right side.
FIG. 3 is a bottom view of the left part of the undercover shown in FIG. 1.
FIG. 4 is a side view of the front portion of the left side surface of the undercover shown in FIG. 1.
FIG. 5 is a front view of the front left half of the vehicle body shown in FIG. 1.
FIG. 6 is a cross-sectional view taken along line VI-VI in FIG. 5.
FIG. 7 is a perspective view of the right half of the undercover shown in FIG. 1, as viewed obliquely from the right bottom.
FIG. 8 is a cross-sectional view taken along line VIII-VIII in FIG. 7.
FIG. 9 is a cross-sectional view taken along line IX-IX in FIG. 7.

### [Mode for carrying out the Invention]

Hereinafter, a vehicle lower structure according to an embodiment of the present invention will be described in detail with reference to drawings.

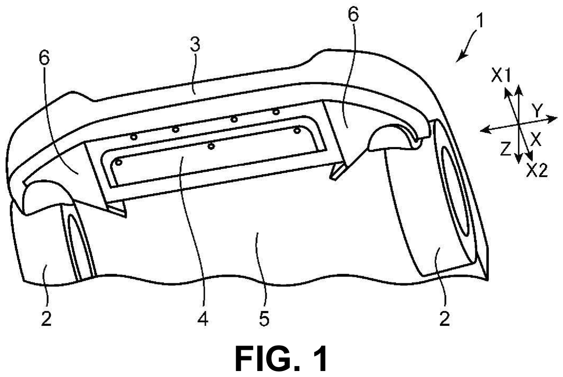

FIG. 1 discloses, as an embodiment of a vehicle lower structure of the present invention, a vehicle lower structure that includes an undercover 4.

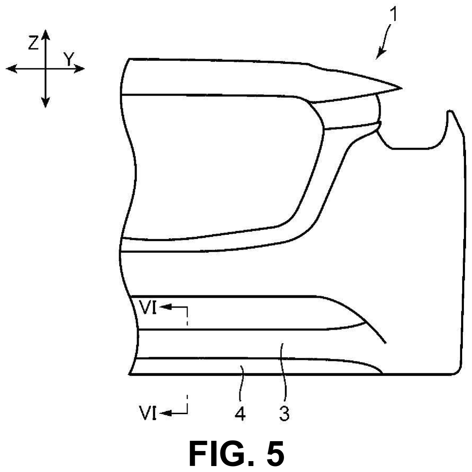

To be more specific, the vehicle lower structure shown in FIG. 1 includes the undercover 4 that covers the bottom surface of a vehicle body 1 within a range on a front side X1 of a pair of front wheels 2 and between the pair of front wheels 2, the undercover 4 being movable in an up-down direction Z. As shown in FIG. 1 and FIGS. 5, 6, the undercover 4 is disposed on the bottom surface of the vehicle body 1 in the range from the vicinity of the front end of a bumper 3 to the front ends of the front wheels 2.

In the vehicle lower structure of the present embodiment, as shown in FIG. 1, a floor panel 5 that covers the bottom surface of the vehicle body 1 is disposed on a side of the undercover 4 toward a vehicle rear side X2. In addition, a pair of side undercovers 6 are disposed on both sides of the undercover 4 in a vehicle width direction Y. In the present invention, the floor panel 5 and the side undercovers 6 are not essential constitutional elements, and may be replaced with other members.

Hereinafter, the specific structure of the undercover 4 will be described in more detail.

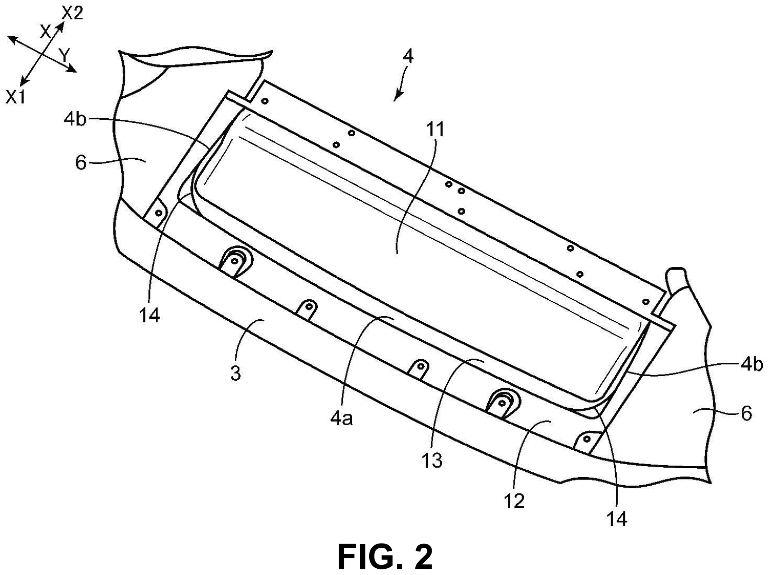

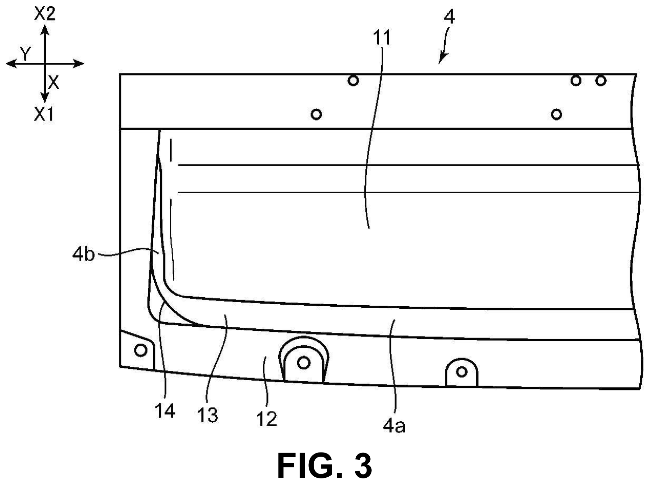

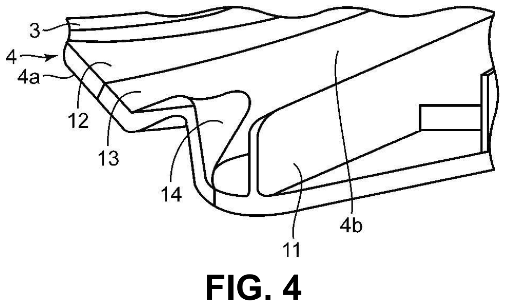

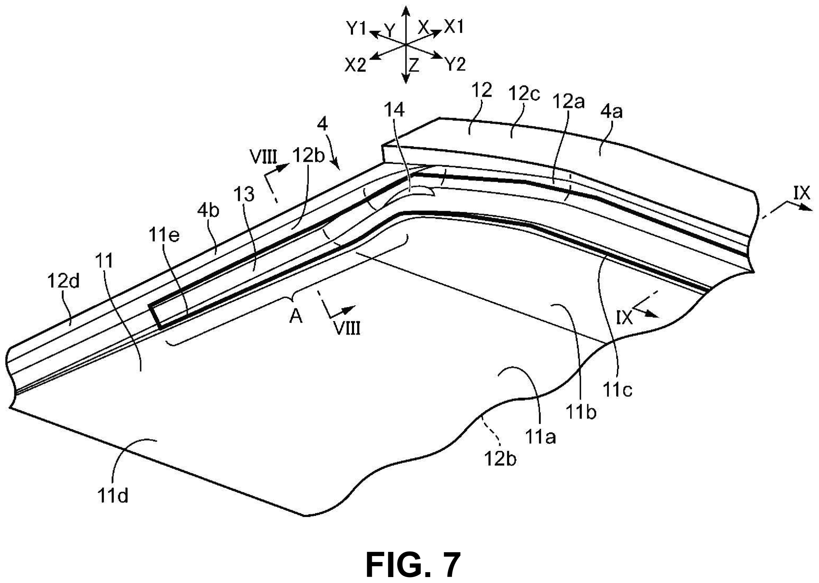

As shown in FIGS. 2 to 9, the undercover 4 includes a movable panel 11, a fixed frame 12, and a deformable member 13, the movable panel 11 being movable in the up-down direction Z, the fixed frame 12 being disposed above the movable panel 11, and being fixed to the bottom surface of the vehicle body 1, the deformable member 13 being deformable and coupling at least a front end portion 11c of the movable panel 11 (in the present embodiment, the front end portion 11c and side end portions 11e on both sides within a range A, excluding a rear end portion 11d (see FIG. 7)) to the fixed frame 12.

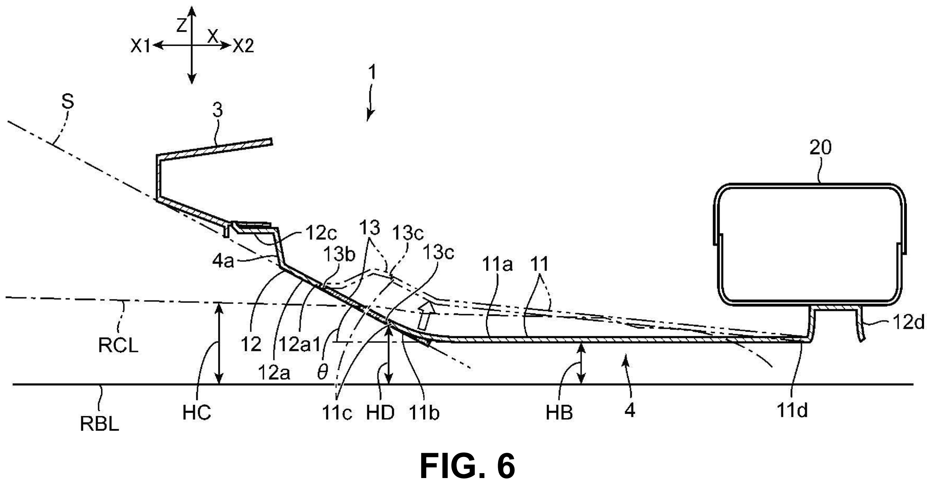

As shown in FIG. 6 and FIG. 7, the movable panel 11 includes the bottom portion 11a and the front inclined surface 11b, the bottom portion 11a being flat, the front inclined surface 11b being inclined upward as the front inclined surface 11b extends toward the vehicle front side X1 from the front end of the bottom portion 11a. The front end portion 11c of the movable panel 11 and the side end portions 11e on both sides in the vehicle width direction Y within the range A (see FIG. 7), excluding the rear end portion 11d, are spaced apart from the fixed frame 12. In contrast, the rear end portion 11d of the movable panel 11 is fixed to the fixed frame 12 (to be more specific, a rear fixed part 12d). Accordingly, the movable panel 11 is partially supported on the fixed frame 12 at the above-mentioned rear end portion 11d in a cantilever state.

As shown in FIG. 6 and FIG. 7, the fixed frame 12 is a frame body that is fixed to the bottom surface of the vehicle body 1. The fixed frame 12 includes the front portion 12a, the pair of side portions 12b, a front fixed part 12c, and the rear fixed part 12d, the pair of side portions 12b extending toward the rear side X2 from both ends of the front portion 12a in the vehicle width direction Y, the front fixed part 12c being fixed to the bottom surface of the bumper 3 of the vehicle body 1, the rear fixed part 12d being fixed to a suspension cross member 20 of the vehicle body 1 (a cross member being located on a side of the bumper 3 toward the rear side X2, and extending in the vehicle width direction Y). The front portion 12a is inclined at an inclination angle substantially equal to that of the above-mentioned front inclined surface 11b in a direction toward the upper side as the front portion 12a extends toward the front side X1.

The movable panel 11 and the fixed frame 12 are manufactured from a resin material, a metal material, or the like that is less likely to be deformed. For example, a resin material that is less likely to be deformed, such as polypropylene, is used for the movable panel 11 and the fixed frame 12. The movable panel 11 has bending rigidity to an extent that allows the movable panel 11 to be elastically deformed and swung in the up-down direction Z.

The deformable member 13 is made of a material softer than the material of the movable panel 11, and is made of, for example, a resin material that is more easily deformed than polypropylene, such as elastomer. The deformable member 13 is configured such that, when the movable panel 11 interferes with the road surface, the deformable member 13 is deformed as shown in FIG. 6, thereby allowing the movable panel 11 to move upward.

To be more specific, the deformable member 13 is formed of a film-like body that is easily deformed, and that is made of elastomer. The deformable member 13 is disposed along the entire front end portion 11c of the movable panel 11 (within a range over the entire length in the vehicle width direction Y) and along the side end portions 11e on both sides in the vehicle width direction Y within the range A, excluding the rear end portion 11d.

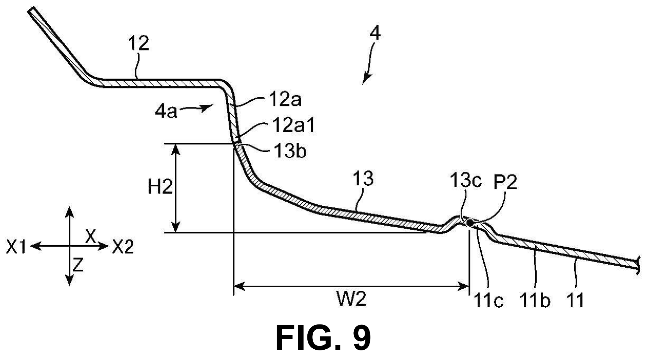

More specifically, at the front portion 4a of the undercover 4, as shown in FIGS. 6 and 7, and FIG. 9, a front end portion 13b of the deformable member 13 is joined to the rear end portion 12a1 of the front portion 12a of the fixed frame 12. A rear end portion 13c of the deformable member 13 is joined to the front end portion 11c of the movable panel 11. When the front end portion 11c of the movable panel 11 is a flat surface, the deformable member 13 made of elastomer can be easily joined. Accordingly, it is preferable that the front end portion 11c of the movable panel 11 be a flat surface. A joining position P2 shown in FIG. 9 between the rear end portion 13c of the deformable member 13 and the front end portion 11c of the movable panel 11 is disposed at a position slightly above (approximately 5 mm above) the front inclined surface 11b of the movable panel 11 and hence, there is no concern of the joining position P2 interfering with the road surface (or a slope S described later), and the front inclined surface 11b interferes with the road surface before the joining position P2 interferes with the road surface.

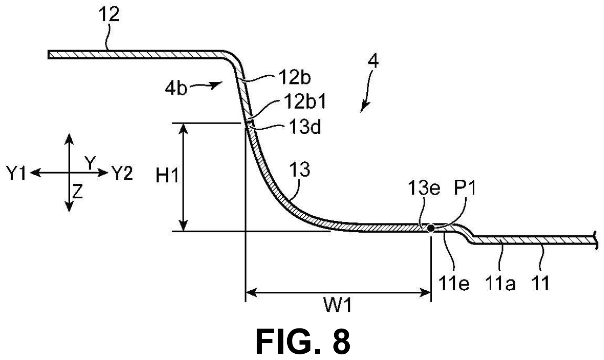

At a side portion 4b of the undercover 4, as shown in FIGS. 7 and 8, an end portion 13d of the deformable member 13 on the vehicle-width-direction outer side Y1 is joined to the lower end portion 12b1 of the side portion 12b of the fixed frame 12. An end portion 13e of the deformable member 13 on a vehicle-width-direction inner side Y2 is joined to the side end portion 11e of the movable panel 11. A joining position P1 shown in FIG. 8 between the end portion 13e of the deformable member 13 and the side end portion 11e of the movable panel 11 is disposed at a position slightly above (approximately 5 mm above) a bottom portion 11a of the movable panel 11 and hence, there is no concern of the joining position P1 interfering with the road surface (or the slope S described later), and the bottom portion 11a interferes with the road surface before the joining position P1 interferes with the road surface.

When the front end portion 11c and the side end portions 11e of the above-mentioned movable panel 11 are flat surfaces, the deformable member 13 can be easily joined, the deformable member 13 being made of elastomer, which is a material different from the material of the front end portion 11c and the side end portions 11e of the movable panel 11. Accordingly, it is preferable that the front end portion 11c and the side end portions 11e of the movable panel 11 be flat surfaces.

As shown in the above-mentioned FIGS. 8 and 9, the deformable member 13 couples the movable panel 11 to the fixed frame 12 with a length that provides slight slack as a margin, so that the deformable member 13 does not prevent the movement of the movable panel 11 in the up-down direction Z.

Next, the arrangement, the dimension, and the like of the undercover 4 will be described with reference to FIG. 6. In the present embodiment, a normal traveling surface RBL for the vehicle is set as a normal road surface, and a road surface interference line RCL that is at a predetermined height HC from the traveling surface RBL is set as the height of an obstacle, a stepped portion, or the like on the road surface.

The height HC of the road surface interference line RCL is set by taking into account the type of vehicle (normal passenger car, SUV, or the like) and the expected traveling environment, and is set to approximately 100 to 130 mm, for example.

A height HB of the bottom portion 11a of the movable panel 11 from the traveling surface RBL is set to a height that prevents the bottom portion 11a of the movable panel 11 from impinging on the traveling surface RBL during normal traveling, and that is lower than the height HC of the road surface interference line RCL. It is preferable that this height HB be a height that allows negative pressure to be decreased on a side of the bottom portion 11a toward the rear side X2 during traveling of the vehicle.

A higher height HD of the front end portion 11c of the movable panel 11 reliably allows only the movable panel 11 to interfere with the road surface (prevents the deformable member 13 from interfering with the road surface), and is therefore preferable. It is preferable that the height HD of the front end portion 11c of the movable panel 11 be higher than the height HC of the road surface interference line RCL, if possible.

An inclination angle θ of the front portion 4a of the undercover 4 (to be more specific, the front inclined surface 11b of the movable panel 11 and the front portion 12a of the fixed frame 12) with respect to the traveling surface RBL is set to be larger than an angle of an inclined surface expected under normal use conditions of the vehicle, for example, the slope S expected during traveling on a general inclined road or during off-road traveling (that is, an inclined surface assumed based on a line connecting a ground contact point of the front wheels 2 and the front end of the bumper 3 when the vehicle vigorously climbs or descends a bank during off-road traveling).

To prevent interference with the above-mentioned slope S, at the front portion 4a of the undercover 4, it is preferable to set a width H2 of the deformable member 13 in the direction Z shown in FIG. 9 to a small value, and to set a width W2 of the deformable member 13 in a front-rear direction X to a large value.

To increase the swing range in the up-down direction Z of the above-mentioned movable panel 11, which is supported on the fixed frame 12 in a cantilever state, as shown in FIG. 8 and 9, it is preferable that the length of the deformable member 13 in cross section taken along the front-rear direction at the front portion 4a of the undercover 4 (that is, the length of the entire part extending in a curved shape from the front end portion 13b to the rear end portion 13c) be longer than the length of the deformable member 13 in cross section taken along the vehicle width direction at the side portion 4b of the undercover 4 (that is, the length of the entire part extending in a curved shape from the end portion 13d on the vehicle-width-direction outer side to the end portion 13e on the vehicle-width-direction inner side).

As shown in FIG. 6 and FIG. 9, in a case in which the front end portion 11c of the movable panel 11 moves upward beyond the front end portion 13b of the deformable member 13 when the front end portion 11c of the movable panel 11 moves upward between the front end portion 11c of the movable panel 11 and the fixed frame 12, the deformable member 13 may be pulled, and thereby broken. Accordingly, to avoid the breakage, it is preferable that the deformable member 13 extend to have a length equal to or less than the height of the front end portion 13b of the deformable member 13 when the front end portion 11c of the movable panel 11 moves upward. Accordingly, it is preferable that the horizontal length W2 (the length in the front-rear direction X) of the deformable member 13 at the front portion 4a of the undercover 4 shown in FIG. 9 be sufficiently longer than a horizontal length W1 (the length in the vehicle width direction Y) of the deformable member 13 at the side portion 4b of the undercover 4 shown in FIG. 8.

As described above, when the movable panel 11 and the fixed frame 12 are made of a resin material, such as polypropylene, and the deformable member 13 is formed of a film body made of a resin material, such as elastomer, the undercover 4 may be integrally formed by two-color molding using two kinds of resin material, that is, polypropylene and elastomer.

The deformable member 13 is formed of a film body, thus coupling the movable panel 11 to the fixed frame 12, and closing a gap between the movable panel 11 and the fixed frame 12 to prevent intrusion of air or water into the undercover 4.

In the present embodiment, as shown in FIGS. 2 to 4 and FIG. 7, the deformable member 13 formed of a film body has the recesses 14 at both end portions of the front portion 4a of the undercover 4 in the vehicle width direction Y, the recesses 14 serving as starting points of deformation of the deformable member 13.

### (Feature of the present embodiment)

(1)
As shown in FIGS. 1 to 9, the vehicle lower structure of the present embodiment includes the undercover 4 that covers the bottom surface of the vehicle body 1 within the range on the front side of the pair of front wheels 2 and between the pair of front wheels 2. The undercover 4 includes the movable panel 11, the fixed frame 12, and the deformable member 13, the movable panel 11 being movable in the up-down direction Z, the fixed frame 12 being disposed above the movable panel 11, and being fixed to the bottom surface of the vehicle body 1, the deformable member 13 being deformable and coupling at least the front end portion 11c of the movable panel 11 to the fixed frame 12. The deformable member 13 is made of a material softer than the material of the movable panel 11, and is configured such that, when the movable panel 11 interferes with the road surface, the deformable member 13 is deformed, thereby allowing the movable panel 11 to move upward.

In such a configuration, the undercover 4 includes the movable panel 11, the fixed frame 12, and the soft deformable member 13, the fixed frame 12 being fixed to the bottom surface of the vehicle body 1, the soft deformable member 13 being deformable and coupling at least the front end portion 11c of the movable panel 11 to the fixed frame 12. Therefore, when the movable panel 11 of the undercover 4 comes into contact with an obstacle or a stepped portion protruding from the road surface during traveling of the vehicle, that is, when the movable panel 11 interferes with the road surface, as shown in FIG. 6, the soft deformable member 13 is deformed, thereby allowing the movable panel 11 to move upward and hence, it is possible to reduce a load received by the movable panel 11. Consequently, it is possible to prevent damage to the undercover 4 when interference with the road surface occurs.

Further, in the above-mentioned configuration, there is no concern of damage to the movable panel 11 and hence, the flat bottom portion 11a of the movable panel 11 can be disposed at a height close to the road surface. Therefore, during traveling of the vehicle, at the flat bottom portion 11a of the movable panel 11, negative pressure decreases toward the rear side from the front end, thereby facilitating airflow, and making traveling air less likely to impinge on the pair of front wheels 2 located on both sides of the movable panel 11 in the vehicle width direction. As a result, it is possible to reduce air resistance during traveling.

To enhance the effect of reducing air resistance, it is preferable that the movable panel 11 have a long length in the front-rear direction X, particularly, the bottom portion 11a have a long length. To achieve this, it is preferable that the front end portion 11c of the movable panel 11 be positioned as far forward as possible.

(2)
In the vehicle lower structure of the present embodiment, the movable panel 11 is made of polypropylene. The deformable member 13 is made of elastomer.

In such a configuration, the deformable member 13 is made of elastomer, and thus is sufficiently softer than and has higher deformability than the movable panel 11 made of polypropylene. Therefore, when the movable panel 11 interferes with the road surface, the deformable member 13 is significantly deformed with a small load, thereby allowing the movable panel 11 to quickly and smoothly move upward. As a result, it is possible to reliably prevent damage to the undercover 4 when interference with the road surface occurs.

(3)
In the vehicle lower structure of the present embodiment, as shown in FIG. 6 and FIG. 7, the deformable member 13 is disposed along the entire front end portion 11c of the movable panel 11 and along the side end portions 11e on both sides in the vehicle width direction within the range A, excluding the rear end portion 11d. The rear end portion 11d of the movable panel 11 is fixed to the fixed frame 12.

In such a configuration, the front end portion 11c of the movable panel 11 and both side end portions 11e within the range A, excluding the rear end portion 11d, are coupled to the fixed frame 12 via the deformable member 13, and the rear end portion 11d of the movable panel 11 is partially fixed to the fixed frame 12. Accordingly, the movable panel 11 is supported on the fixed frame 12 only at the rear end portion 11d in a cantilever state and hence, when interference with the road surface occurs, the front end portion 11c of the movable panel 11 can significantly swing in the up-down direction Z. As a result, it is possible to reliably prevent damage to the undercover 4 when interference with the road surface occurs.

In the present embodiment, although the movable panel 11, which is supported in a cantilever state, is made of a resin material, such as polypropylene, and is less likely to be deformed than elastomer, the movable panel 11 can be elastically deformed when interference with the road surface occurs. Therefore, although the movable panel 11 is elastically deformed (flexurally deformed) and swung upward when interference with the road surface occurs, the movable panel 11 returns to a normal horizontal state by the restoring force of the movable panel 11 itself when interference with the road surface is removed. The soft deformable member 13 is deformed following the upward and downward movement of the movable panel 11 (is deflected or pulled, thereby being deformed).

(4)
In the vehicle lower structure of the present embodiment, it is preferable that the length of the deformable member 13 in cross section taken along the front-rear direction at the front portion 4a of the undercover 4 shown in FIG. 9 (that is, the length of the entire part extending in a curved shape from the front end portion 13b to the rear end portion 13c) be longer than the length of the deformable member 13 in cross section taken along the vehicle width direction at the side portion 4b of the undercover 4 shown in FIG. 8 (that is, the length of the entire part extending in a curved shape from the end portion 13d on the vehicle-width-direction outer side to the end portion 13e on the vehicle-width-direction inner side).

With such a configuration, the swing range in the up-down direction Z of the front end portion 11c of the movable panel 11 is increased and hence, it is possible to more reliably prevent damage to the undercover 4 when interference with the road surface occurs.

(5)
In the vehicle lower structure of the present embodiment, as shown in FIG. 6 and FIG. 9, the deformable member 13 extends between the front end portion 11c of the movable panel 11 and the fixed frame 12 to have a length equal to or less than the height of the front end portion 13b of the deformable member 13 when the front end portion 11c of the movable panel 11 moves upward.

In such a configuration, the deformable member 13 extends between the front end portion 11c of the movable panel 11 and the fixed frame 12 to have the above-mentioned length and hence, when the movable panel 11 interferes with the road surface, and therefore the front end portion 11c of the movable panel 11 moves upward, the front end portion 11c of the movable panel 11 has a height equal to or less than the height of the front end portion 13b of the deformable member 13. Consequently, it is possible to eliminate concern that the front end portion 11c of the movable panel 11 moves upward beyond the front end portion 13b of the deformable member 13, thereby pulling and breaking the deformable member 13.

### [Reference Signs List]

- 1: vehicle body
- 2: front wheel
- 4: undercover
- 4a: front portion
- 4b: side portion
- 11: movable panel
- 11a: bottom portion
- 11b: front inclined surface
- 11c: front end portion
- 11d: rear end portion
- 11e: side end portion
- 12: fixed frame
- 12a: front portion
- 12b: side portion
- 12c: front fixed part
- 12d: rear fixed part
- 13: deformable member
- 13b: front end portion
- 13c: rear end portion
- 13d: end portion on vehicle-width-direction outer side
- 13e: end portion on vehicle-width-direction inner side

## Claims

1. A vehicle lower structure comprising an undercover (4) that is configured for covering a bottom surface of a vehicle body (1) of a vehicle within a range on a front side of a pair of front wheels (2) and between the pair of front wheels (2) , the vehicle lower structure being **characterized in that**
the undercover (4) includes a movable panel (11), a fixed frame (12), and a deformable member (13), the movable panel (11) being movable in an up-down direction, the fixed frame (12) being disposed above the movable panel (11) in a vehicle height direction (z), and being fixed to the bottom surface of the vehicle body (1), the deformable member (13) being deformable and coupling at least a front end portion (11c) of the movable panel (11) to the fixed frame (12), and
the deformable member (13) is made of a material softer than a material of the movable panel (11), and is configured such that, when the movable panel (11) interferes with a road surface (GR), the deformable member (13) is deformed, thereby allowing the movable panel (11) to move upward.

2. The vehicle lower structure according to claim 1, the vehicle lower structure being **characterized in that**
the movable panel (11) is made of polypropylene, and
the deformable member (13) is made of elastomer.

3. The vehicle lower structure according to claim 1 or 2, the vehicle lower structure being **characterized in that**
the deformable member (13) is disposed along an entire front end portion (11c) of the movable panel (11) and side end portions (11e) of the movable panel (11) on both sides in a vehicle width direction (Y) within a range, excluding a rear end portion (11d) of the movable panel (11), and
the rear end portion (11d) of the movable panel (11) is fixed to the fixed frame (12).

4. The vehicle lower structure according to claim 3, the vehicle lower structure being **characterized in that**
a length of the deformable member (13) in cross section taken along a front-rear direction (X) at a front portion (4a) of the undercover (4) is longer than a length of the deformable member (13) in cross section taken along the vehicle width direction (Y) at a side portion of the undercover (4).

5. The vehicle lower structure according to claim 1 or 2, the vehicle lower structure being **characterized in that**
the deformable member (13) extends between the front end portion (11c) of the movable panel (11) and the fixed frame (12) to have a length equal to or less than a height of a front end portion (13b) of the deformable member (13) when the front end portion (13b) of the movable panel (13) moves upward.

6. The vehicle lower structure according to any one of the preceding claims, **characterized in that**
the movable panel (11) includes a flat bottom portion (11a) and a front inclined surface (11b) that is inclined upward as it extends toward a vehicle front side (X1).

7. The vehicle lower structure according to claim 3, **characterized in that**
the movable panel (11) is supported in a cantilever state by being fixed to the fixed frame (12) at its rear end portion (11d).

8. The vehicle lower structure according to any one of the preceding claims, **characterized in that** the deformable member (13) is a film-like body.

9. The vehicle lower structure according to claim 8, **characterized in that**
the film-like deformable member (13) closes a gap between the movable panel (11) and the fixed frame (12) to prevent intrusion of air or water.

10. The vehicle lower structure according to any of the preceding claims, **characterized in that**
the undercover (4) is integrally formed by two-color molding using two kinds of resin material, in particular polypropylene and elastomer.

11. The vehicle lower structure according to any one of the preceding claims, **characterized in that**
the deformable member (13) has recesses (14) configured to serve as starting points of deformation.

12. The vehicle lower structure according to any one of the preceding claims, **characterized in that**
a joining position (P2) between the deformable member (13) and the front end portion (11c) of the movable panel (11) is disposed at a position, in a vehicle height direction (z), above an outer surface of the movable panel (11), in particular above the inclined surface 11b.

13. The vehicle lower structure according any of the preceding claims 1 to 11, **characterized in that**
a joining position (P1) between the deformable member (13) and the side end portions (11e) of the movable panel (11) is disposed at a position, in a vehicle height direction (z), above a bottom portion (11a) of the movable panel (11).

14. A vehicle comprising a vehicle lower structure according to any of the preceding claims.

15. The vehicle according to claim 14, **characterized in that**
the fixed frame (12) is fixed to a bumper (3) and a suspension cross member (20) of the vehicle body (1) of the vehicle.
